**Europäisches Patentamt**

**European Patent Office**

**Office européen des brevets**

(19)

(11) **EP 1 425 543 B1**

(12) **EUROPÄISCHE PATENTSCHRIFT**

(45) Veröffentlichungstag und Bekanntmachung des Hinweises auf die Patenterteilung:
**01.03.2006 Patentblatt 2006/09**

(51) Int Cl.:
*F24F 5/00* (2006.01)   *F24F 12/00* (2006.01)

(21) Anmeldenummer: **02772051.5**

(22) Anmeldetag: **10.09.2002**

(86) Internationale Anmeldenummer:
**PCT/DE2002/003377**

(87) Internationale Veröffentlichungsnummer:
**WO 2003/025468 (27.03.2003 Gazette 2003/13)**

(54) **VERFAHREN UND VORRICHTUNG ZUR KÜHLUNG EINES FLUIDSTROMS DURCH VERDUNSTUNGSKÜHLUNG**

METHOD AND DEVICE FOR EVAPORATION COOLING OF A FLUID FLOW

PROCEDE ET DISPOSITIF DE REFROIDISSEMENT PAR EVAPORATION D'UN FLUX DE FLUIDE

(84) Benannte Vertragsstaaten:
**AT DE NL**

(30) Priorität: **14.09.2001 DE 10146005**

(43) Veröffentlichungstag der Anmeldung:
**09.06.2004 Patentblatt 2004/24**

(73) Patentinhaber: **Fischer, Volker**
**01189 Dresden (DE)**

(72) Erfinder: **Fischer, Volker**
**01189 Dresden (DE)**

(74) Vertreter: **Heyner, Klaus**
**Patentanwälte**
**Dr. Heyner & Dr. Sperling,**
**Niederwaldstrasse 27**
**01277 Dresden (DE)**

(56) Entgegenhaltungen:
CH-A- 682 513     DE-A- 19 959 738
NL-A- 9 201 433   US-A- 2 162 158
US-A- 4 910 971

• PATENT ABSTRACTS OF JAPAN vol. 1996, no. 06, 28. Juni 1996 (1996-06-28) & JP 08 028944 A (KAJIMA CORP), 2. Februar 1996 (1996-02-02)

**Beschreibung**

Die Erfindung betrifft ein Verfahren und eine Vorrichtung zur Verdunstungskühlung eines Fluidstroms. Ein Anwendungsgebiet liegt insbesondere in der effizienten Bereitstellung von Kaltwasser zur Kühlung von Aufenthaltsräumen mittels großen Kühlflächen - hierbei auch- mit Zwischenspeicherung des Kaltwassers in geeigneten Bauteilen oder Speichern.

Verfahren der genannten Art nach dem Oberbegriff der Erfindung sind im Stand der Technik in verschiedenster Form bekannt.

Die Anwendung der Verdunstungskühlung als ein thermodynamisches Verfahren zur Kälteerzeugung mit verhältnismäßig hohem Stoff- und einem relativ geringen Energieverbrauch ist sehr häufig anzutreffen (siehe z.B. US-2 162 158-A). Prinzipiell ist die Verdunstungskühlung dadurch gekennzeichnet, dass zumindest ein beteiligter Fluidstrom durch den für einen Verdunstungsvorgang notwendigen Energieaufwand abgekühlt wird oder kondensiert. Gewöhnlich unterscheidet man je nach dem über die Systemgrenze übertragenen Wärmebetrag in adiabate und nichtadiabate Verdunstungskühlung.

Am häufigsten stehen bei Anwendungen der Verdunstungskühlung feuchte Luft und Wasser im Wärme- und Stoffaustausch.

Beispiele für die Anwendung der Verdunstungskühlung in der Klimatechnik sind die adiabate Befeuchtung in einem Luftwäscher in Zentrallüftungsgeräten oder Kühltürme in verschiedenster Ausführung. Bei Kühltürmen - auch Rückkühlwerke genannt - unterscheidet man üblicherweise offene oder geschlossene Ausführungen. Dem Wesen nach betrifft diese Einordnung die oben genannte Verfahrenseinteilung in adiabate und nichtadiabate Verdunstungskühlung.

Je nach angestrebtem Temperaturbereich bei der Verdunstungskühlung ist auch der Austausch von Wasser durch andere zu verdunstende Stoffe mit einer Auswahl entsprechend ihrer Siedetemperatur möglich, genauso wie der Ersatz des Luftstroms durch einen anderen gasförmigen Fluidstrom zur Aufrechterhaltung des Dampfdruckgefälles zum zu verdunstenden Stoff.

Offene und geschlossene Kühltürme werden seit langem als Rückkühlwerke von Kälteanlagen eingesetzt [1]. Stand der Technik ist auch die direkte Kaltwasserbereitstellung durch einen Kühlturm innerhalb eines definierten, wirtschaftlichen Bereichs von Außenluftzuständen.

Mit der Beschreibung der ablaufenden physikalischen Vorgänge beschäftigen sich eine Vielzahl von Veröffentlichungen, zum Beispiel [2], [3] und [4], sodass im Allgemeinen von einer vollständigen theoretischen Beschreibbarkeit der Abläufe auszugehen ist.

Die Wirtschaftlichkeit eines Einsatzes von technischen Vorrichtungen mit dem Arbeitsprinzip Verdunstungskühlung gegenüber anderen Verfahren und Vorrichtungen zur Kälteerzeugung entscheidet sich nach den üblichen Kriterien: Investitionskosten, verbrauchsgebundene Kosten, betriebsgebundene Kosten und sonstige Kosten, wobei sich die Gewichtung einzelner Einflussgrößen entsprechend den aktuellen Randbedingungen ändern kann.

Eines der Haupteinsatzgebiete der Erfindung ist die Bereitstellung von Kaltwasser für die Kühlung von Gebäuden unter Einsatz von Flächenkühlsystemen. Unter Flächenkühlsystemen sind hierbei insbesondere Kühldecken, -wände, -böden sowie freihängende großflächige Konstruktionen zu verstehen, die auf Grund der Durchströmung mit Wasser geringer Temperatur Wärmeenergie durch die Übertragungsmechanismen Strahlung und Konvektion aus einem Raum aufnehmen und abführen können.

Für gebräuchliche Kaltwasservorlauftemperaturen von ca. 16 °C bis 19 °C für Flächenkühlsysteme aller Art in Räumen ist der Einsatz von offenen und geschlossenen Kühltürmen bisher nur in einem beschränkten Bereich aller möglichen Außenluftzustände gegeben. Dieser ergibt sich im Wesentlichen aus den gewünschten Kaltwassertemperaturen und aus konstruktiven Eigenschaften des Kühlturms, die den erreichbaren Abkühlungsgrad bestimmen. Die Grenze zwischen den Luftzustandsbereichen, die eine ausreichende bzw. ungenügende Abkühlung ermöglichen, ist durch die Feuchtkugeltemperatur$_{Auslegungsfall}$ = Kühlgrenztemperatur$_{Auslegungsfall}$ gekennzeichnet. Eine Feuchtkugeltemperatur charakterisiert dabei alle die Luftzustände, die an einem Thermometer mit befeuchtetem Fühler die gleiche Temperatur = Feuchtkugeltemperatur anzeigen.

Nach der Lehre der DE 199 59 738 A1 und der DE 199 03 743 A1 wird durch Zwischenspeicherung in Phasenwechselspeichern versucht, die beim Kühlturmbetrieb auftretende zeitliche Diskrepanz zwischen Angebot und Bedarf nach Kaltwasser ausreichend geringer Temperatur zur direkten Raumkühlung auszugleichen. Den gleichen Lösungsansatz verwendet die Lehre der DE 299 03 863 U1. Den genannte Vorrichtungen und Verfahren ist jedoch der Nachteil aller Speichersysteme, wie Bereitstellung ausreichend dimensionierter Speicher, Speicherverluste, Prognose des zukünftigen Bedarfs usw., immanent.

Ziel der Erfindung ist es, den Einsatzbereich der Verdunstungskühlung zur Kühlung eines Fluidstroms A bei gleichzeitiger Abkühlung des Fluidstroms B, der den zu verdunstenden Stoff- oder Stoffgemischstrom aufnimmt und dessen Enthalpie sich dadurch erhöht, auf einfache und effiziente Art und Weise zu erweitern. Insbesondere gilt es, die Anwendung offener und geschlossener Kühltürme auf Außenluftzustände über die Feuchtkugeltemperatur$_{Auslegungsfall}$ im oben genannten Kaltwasserbereich auszudehnen.

Erfindungsgemäß wird dies durch ein Verfahren ermöglicht, indem der Fluidstrom B vorgekühlt wird und sich dadurch seine Kühlgrenztemperatur verringert. Die bei der Vorkühlung des eintretenden Fluidstroms B abzugebende Energie wird auf den austretenden Fluidstrom B übertragen.

Für das bevorzugte Anwendungsziel offener und geschlossener Kühltürme bedeutet dies die Vorkühlung der eintretenden Luft durch die abgekühlte und feuchtere austretende Luft.

Die Aufgabe wird insbesondere durch eine Vorrichtung zur Durchführung des erfindungsgemäßen Verfahrens gelöst. Diese Vorrichtung weist einen technische Abschnitt 1 zur Kühlung eines Fluidstroms A unter Ausnutzung der Verdunstungskühlung und einen technischen Abschnitt 2 zur Übertragung von Energie zwischen dem ein- und austretenden Fluidstrom B auf.

Für die Anwendung offener und geschlossener Kühlturm kommen für den technischen Abschnitt 2 beispielhaft Wärmeübertrager in Form von Regeneratoren, Rekuperatoren sowie Kreislaufverbundsysteme oder Wärmerohre zum Einsatz.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:

Fig. 1:     Prinzipskizze nach Patentanspruch 1 mit einem offenen Kühlturm,
Fig. 2:     Prinzipskizze nach Patentanspruch 1 mit einem geschlossenen Kühlturm,
Fig. 3:     Bereich von Außenluftzuständen entsprechend Beispiel 1,
Fig. 4a:    Raumkonfiguration für das Beispiel 2 - Wandaufbaub entsprechend Fig. 4b,
Fig. 4b:    Wandaufbau für das Beispiel 2 - Nummerierung der Wandabschnitte nach Fig. 4a,
Fig. 5:     Bereich von Außenluftzuständen entsprechend Beispiel 2,
Fig. 6:     Prinzipskizze nach Patentanspruch 6,
Fig. 7:     Prinzipskizze nach Patentanspruch 2 und Beispiel 3 mit einem offenen Kühlturm.

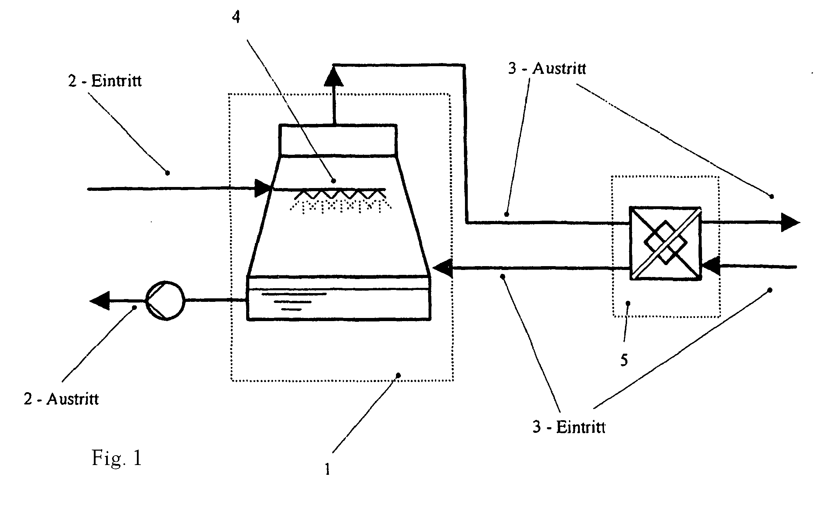

Gemäß Fig.1 wird das erfindungsgemäße Verfahren in einer Verbindung nach dem gezeigten Blockschaltbild realisiert, wobei die Symbolik entsprechend [8] gewählt wurde.

Der dargestellte offene Kühlturm repräsentiert den technischen Abschnitt 1, in dem der zu kühlende Fluidstrom A 2 (Wasser) in geeigneter Weise (Sprüh/Düsensystem, Verrieselung an Elementen usw.) großflächig mit dem Fluidstrom B 3 (Luft) in Kontakt gebracht wird. Bei Lufteintrittstemperaturen größer als die gewünschte Kaltwassertemperatur tritt die Luft feuchter und kühler aus dem offenen Kühlturm aus. Die Temperaturdifferenz zwischen den Luftein- und -austrittszuständen kann dann in dem technischen Abschnitt 2 zur Vorkühlung durch Energieübertragung ausgenutzt werden.

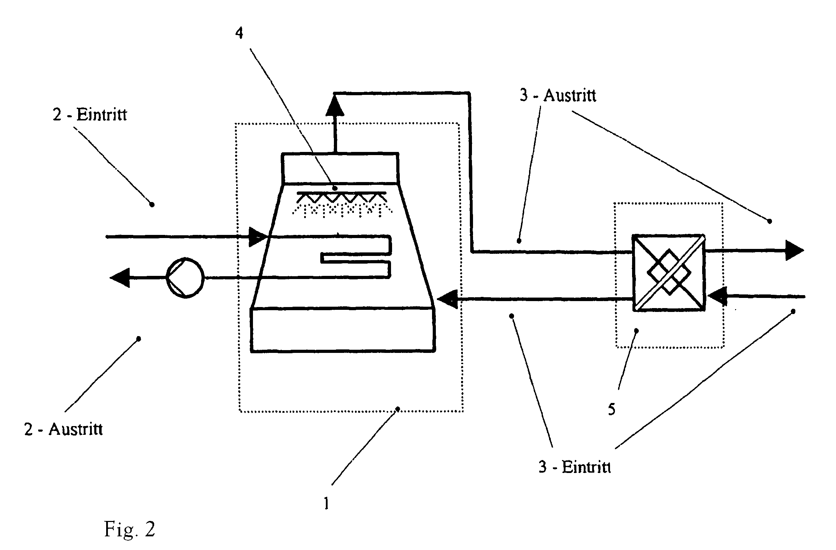

Fig. 2 zeigt den gleichen Vorgang mit einem geschlossenen Kühlturm. Im Unterschied zum Ablauf nach Fig. 1 wird der zu kühlende Fluidstrom A 2 (Wasser) innerhalb des technischen Abschnittes 1 in geeigneten Rohr- oder Kanalsystemen geführt und nimmt nicht am Stoffaustausch teil.

Ein zusätzlicher Fluidstrom 4 (hier auch Wasser) wird innerhalb des Abschnittes 1 eingebracht und entzieht beim Verdunsten dem Fluidstrom A 2 Wärmeenergie. Der Vorgang der Absenkung der Feuchtkugeltemperatur durch Vorkühlung des Fluidstroms B 3 geschieht äquivalent zu den Ausführungen zu Fig. 1 innerhalb des technischen Abschnittes 2 mit Bezugszeichen 5.

Zur Steigerung der Wirtschaftlichkeit und Leistung der Erfindung sind die folgenden, von ähnlichen Verfahren und Vorrichtungen her bekannten Maßnahmen zur Anpassung des Betriebspunktes an aktuelle Anforderungen und zur Leistungssteigerung sinnvoll:

• Regelung des Fluidstroms B, der durch die technischen Abschnitte transportiert wird,
• Regelung des Sättigungszustandes und damit der Temperatur des Fluidstroms B mit dem zu verdunstenden Stoff- oder Stoffgemischstrom unabhängig von der Temperatur des Fluidstroms A, entweder innerhalb des Abschnittes 1 oder durch eine Nachverdunstungsstrecke,
• Regelung der Energieübertragung im technischen Abschnitt 2 und von dazu notwendigen Hilfseinrichtungen,
• Leistungssteigerung der Vorkühlung im technischen Abschnitt 2 durch zusätzliche Verdunstungskühlung innerhalb des Abschnittes 2.

**Beispiel 1** zeigt die Erweiterung der Einsatzmöglichkeiten an konkreten Zahlenwerten

Geschlossener Kühlturm mit den folgenden Parametern

Kühlleistung                    $Q = 50$ kW

Kaltwasservorlauftemperatur     $t_{KW,V} = 16\ °C$

Kaltwasserrücklauftemperatur $t_{KW,R}$ = 20 °C

FeuchtkugeltemperaturAuslegungsfall $t_F$ = 14 °C

- als Näherung Grenzenthalpie $h_1$ = 39,7 kJ/kg

Auslegungsluftmenge $\dot{V}_L$ = 26.000 m³/h

Auslegungsleistung des Lüfters $P_{el}$ = 7 kW

Die spezifische Austrittsenthalpie der Luft aus dem Kühlturm lässt sich mit der Gleichung (1) beschreiben [4]:

$$h_{L,A} = \frac{\dot{Q} + P_{el}}{\dot{m}_{L,}} + (x_{L,A} - x_{L,E}) \cdot c_{p,FW} \cdot t_{FW} + h_{L,E} \tag{1}$$

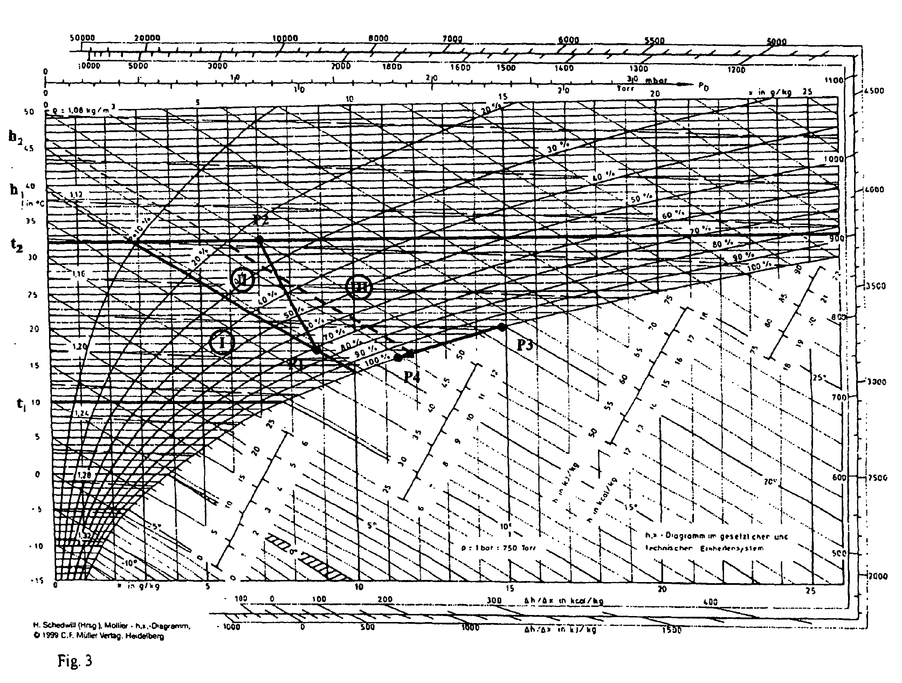

Der Term $(x_{L,A} - x_{L,E})$ kann zur Ermittlung der Effekte in guter Näherung mit 0,0025 kg/kg angenommen werden.
Für einen für das Beispiel festgesetzten Temperaturbereich von $t_1$ = 10 °C bis $t_2$ = 32 °C, innerhalb dessen der Kühlturm die Auslegungskühlleistung erzeugen soll, lassen sich die in Fig. 3 im h, x - Diagramm dargestellten Abschnitte von Außenluftzuständen abgrenzen. Die Erläuterung zu den begrenzenden Linien sind der Bezugszeichenliste zu entnehmen.

Bereich 1     Einsatzmöglichkeit des Kühlturms bei voller Leistung ohne Verwendung der Erfindung.

Bereich II     zusätzlicher Bereich der Einsatzmöglichkeit des Kühlturms bei voller Leistung mit Verwendung der Erfindung,
innerhalb dieses Bereiches können alle Außenluftzustände durch Vorkühlung mindestens bis auf die Feuchtkugeltemperatur$_{Auslegungsfall}$, repräsentiert durch die Linie $h_1$, gebracht werden.

Bereich III     Leistung des Kühlturms außerhalb der Auslegungsparameter.

Werden die meteorologischen Daten der Testreferenzjahre (TRY) 3, 4 und 5 [5] ausgewertet, ergeben sich zum Beispiel folgende Nutzungszeiten (Tabelle 1) in Abhängigkeit des Parameters Rückwärmezahl

$$\Phi = \frac{t_{A,Ab} - t_{E,Ab}}{t_{E,Zu} - t_{E,Ab}} = \frac{t_{E,Zu} - t_{A,Zu}}{t_{E,Zu} - t_{E,Ab}} \tag{2}$$

und einer als konstant gesetzten Austrittsfeuchte der Kühlturmabluft ($\varphi_L$ = 95 %). Die berücksichtigte Betriebszeit umfasste dabei den Zeitraum von 8 bis 18 Uhr an allen Arbeitstagen (Mo. - Fr., abzüglich der gesetzlichen Feiertage).

Tabelle 1 Erweiterung der Einsatzmöglichkeiten eines Kühlturms mit den Verbesserungen entsprechend der
Erfindung - Beispiel 1

| Testreferenzjahr und Rückwärmezahl | Betriebsstunden im Bereich I | Betriebsstunden im Bereich II |
|---|---|---|
| TRY3, $\Phi$ = 0,6 | 930 | 43 |
| TRY3, $\Phi$ = 0,7 | 930 | 57 |
| TRY3, $\Phi$ = 0,8 | 930 | 72 |
| TRY4, $\Phi$ = 0,6 | 866 | 82 |
| TRY4, $\Phi$ = 0,7 | 866 | 97 |
| TRY4, $\Phi$ = 0,8 | 866 | 116 |

Tabelle fortgesetzt

| Testreferenzjahr und Rückwärmezahl | Betriebsstunden im Bereich I | Betriebsstunden im Bereich II |
|---|---|---|
| TRY5, Φ = 0,6 | 766 | 101 |
| TRY5, Φ = 0,7 | 766 | 117 |
| TRY5, Φ = 0,8 | 766 | 138 |

**Beispiel 2** demonstriert, wie unter Ausnutzung der Speicherfähigkeit der Raumumschließungskonstruktion und des vollständigen Behaglichkeitsbereiches die Erfindung im Zusammenspiel mit großen Kühlflächen zur Kühlung von Räumen angewendet werden kann, ohne bis auf wenige Stunden im Jahr zusätzliche Verfahren zur Kälteerzeugung verwenden zu müssen. Im Vergleich zu Verfahren und Systemen, die auch die Speicherfähigkeit der Raumumschließungskonstruktion nutzen - thermische Bauteilaktivierung - ergeben sich hierbei aus dem Umstand, dass nicht der größte Teil der benötigten "Kühlenergie" vorrangig zeitversetzt gespeichert werden muss, für das Gesamtsystem folgende Vorteile:

- bessere Regelfähigkeit und damit eine exaktere Abstimmung der mit geringem Primärenergieaufwand erzeugten Kälte auf die tatsächlichen Anforderungen,
- geringere materielle Aufwendungen, da keine zusätzlichen Vorrichtungen zum Einspeichern der negativen Wärme (zusätzliche Rohrschlangen o.ä.) in Bauteilen verlegt werden müssen.

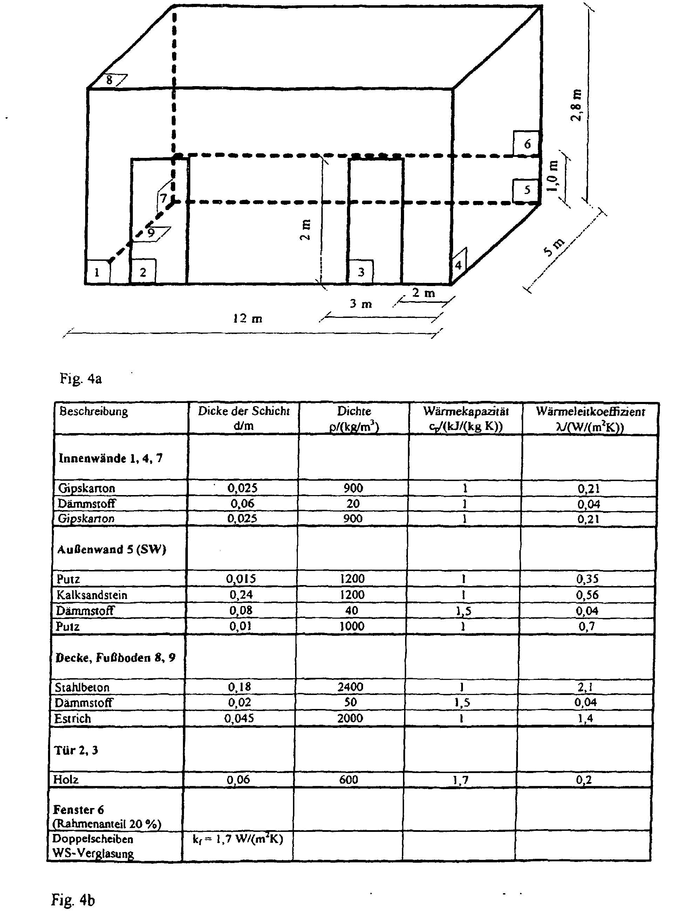

Betrachtet wird der in Fig. 4a und 4b spezifizierte Raum. Weiterhin gelten folgende wesentliche Werte:

Abminderungsfaktor einer
äußeren Verschattung        z = 0,35
Betriebszeit                8-18 Uhr; 12-13 Uhr Mittagspause
Personenzahl                1 Person/10 m$^2$
Innere Lasten               20 W/m$^2$

Wird eine maximale Raumtemperatur von 26 ˚C angesetzt und die Kühllastzone 3 [7] vorausgesetzt, dann beträgt die Kühllast [7] $\dot{Q}_K$ = 3150 W. Das entspricht ca. 52 W/m$^2$.
Auslegungswerte für eine Kühldecke (Der Übersichtlichkeit wegen wird angenommen, dass keine Lasten durch eine Lüftung aufgebracht werden) :

System                              eingeputzte Kapillarrohrmatte
mittlere Kaltwassertemperatur
(Kühlturmparameter nach Beispiel 1)   $t_m$ = 18 ˚C
spezifische Kühlleistung              $\dot{q}_\kappa$ = 75 W/m$^2$
Fläche der Kühldecke                  70% der Deckfläche

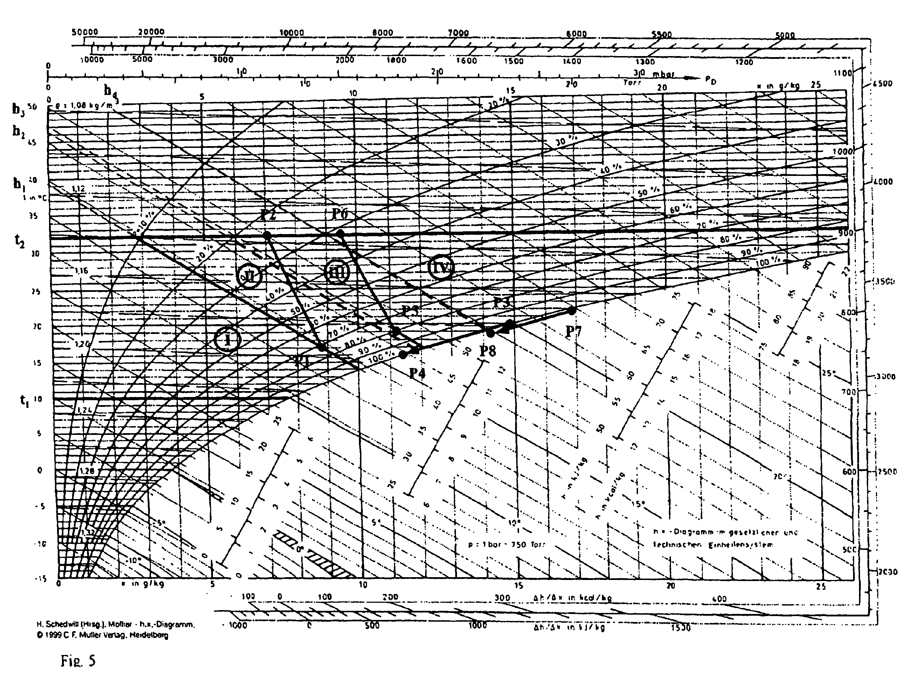

Wird das Beispiel 1 herangezogen, dann sind die Betriebsstunden, bei denen die Raumtemperatur garantiert werden kann, Tabelle 1 zu entnehmen. Fig. 5 und Tabelle 2 veranschaulichen die Bereiche und listen die Betriebsstunden pro Jahr auf, wenn z.B. folgende zusätzliche Betriebsparameter zugelassen werden:

Raumtemperatur nach DIN 1946 [8] d.h. bei $t_{a,max}$ = 32 ˚C        bis 27 ˚C
mögliche Verschiebung der mittleren Kaltwassertemperatur bis zu ($t_{KW,V}$ = 19 ˚C, $t_{KW,R}$ = 22 ˚C)    $t_m$ = 20,5 ˚C

Aus den letztgenannten Parametern ergibt sich in Fig. 5 der Bereich III, der alle die Außenluftzustände erfasst, die mindestens auf die notwendige Feuchtkugeltemperatur, repräsentiert durch die Linie h$_3$, vorgekühlt werden können. Eine Simulationsberechnung mit dem Programmpaket nach [6] erbrachte dabei mit zusätzlichem Betrieb der Kühldecke in den Nachtstunden bei einer notwendigen Verschiebung der Kaltwassertemperaturen den Nachweis, dass die Raumtemperatur bei Außenluftzuständen in den Bereichen I bis III nicht über 27 ˚C steigt.

Tabelle 2 Erweiterung der Einsatzmöglichkeiten eines Kühlturms mit den Verbesserungen entsprechend der Erfindung - Beispiel 2

| Testreferenzjahr und Rückwärmezahl | Betriebsstunden in den Bereichen I, II, III | Betriebsstunden innerhalb des Breiches IV |
|---|---|---|
| TRY3, $\Phi$ = 0,6 | 1369 | 53 |
| TRY3, $\Phi$ = 0,7 | 1373 | 49 |
| TRY3, $\Phi$ = 0,8 | 1383 | 39 |
| TRY4, $\Phi$ = 0,6 | 1302 | 92 |
| TRY4, $\Phi$ = 0,7 | 1311 | 83 |
| TRY4, $\Phi$ = 0,8 | 1325 | 69 |
| TRY5, $\Phi$ = 0,6 | 1264 | 135 |
| TRY5, $\Phi$ = 0,7 | 1278 | 121 |
| TRY5, $\Phi$ = 0,8 | 1297 | 102 |

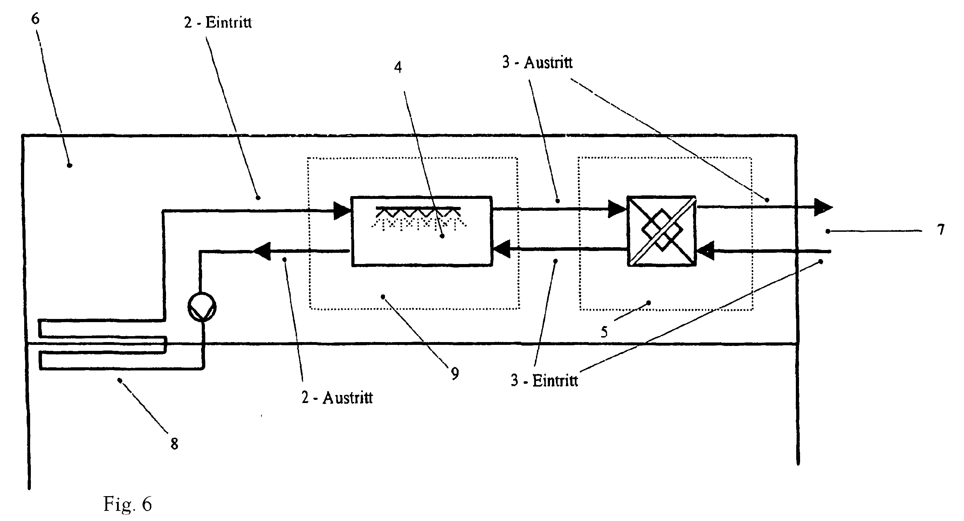

Gemäß einer vorteilhaften Ausführung (vgl. Fig. 6) der Erfindung können zum Beispiel Kühldecken auch über eine dezentrale Einheit, im Wesentlichen bestehend aus einem technischen Abschnitt 1 mit Bezugszeichen 9, zur Kühlung des Kaltwassers 2 unter Ausnutzung der Verdunstungskühlung und eines technischen Abschnittes 2 mit Bezugszeichen 5 zur Übertragung von Energie zwischen dem in den technische Abschnitt 1 mit Bezugszeichen 9 ein- und austretenden Luftvolumenstrom versorgt werden. Diese Ausführung kann zweckmäßigerweise in einer Zwischendeckenkonstruktion untergebracht werden. Der Luftaustausch mit der Umgebung erfolgt unmittelbar über die Fassade des Gebäudes 7.

Eine weitere vorteilhafte Ausgestaltung der Erfindung ist die Nutzung der Abluft von Räumen.
Neben der Einhaltung von Behaglichkeitskriterien wird zur Vermeidung von Kondensationserscheinungen bei der Verwendung von Flächenkühlsystemen in Räumen auch die sommerliche Raumluftfeuchte durch entsprechende raumlufttechnische (RLT-) Anlagen, zum Beispiel Zentralklimaanlagen, in einem bestimmten Bereich gehalten. Beispiel 1 und 2 zeigten, dass auch Außenluftbereiche auftreten, in denen die Erfindung unzureichende Kaltwassertemperaturen erzeugt.

Hier kann es nun zweckmäßig sein (vgl. Beispiel 3), die Abluft von RLT-Anlagen für die Durchführung des Verfahrens zur Kühlung eines Fluidstroms A unter Ausnutzung der Verdunstungskühlung mit gleichzeitiger Abkühlung des eintretenden Fluidstroms B, der den zu verdunstenden Stoff- oder Stoffgemischstrom aufnimmt und dessen Enthalpie sich dadurch erhöht, welches dadurch gekennzeichnet ist, dass der Temperaturunterschied zwischen den Ein- und Austrittszuständen des Fluidstroms B ausgenutzt wird, um die Eintrittstemperatur des Fluidstroms B und damit die Kühlgrenztemperatur zu verringern (Vorkühlung), einzusetzen und bei Zweckdienlichkeit die aus dem nachgeschalteten Wärmeübertrager austretende Luft den RLT-Anlagen, zum Beispiel zur Durchführung des Prozesses Vorkühlung der Zuluft durch adiabate Abluftbefeuchtung, zuzuführen. Beim letztgenannten Prozess wird die Raumabluft in einer Befeuchtereinrichtung adiabat befeuchtet, wodurch sich die Temperatur verringert. Innerhalb einer nachgeschalteten Wärmerückgewinnungseinheit kann dann durch die Abluft die Außenluft effektiv vorgekühlt werden.

Vorraussetzung für die Anwendung des vorangehend beschriebenen Verfahrens in Verbindung mit der dahingehenden Erweiterung, dass als eintretender Fluidstrom B die Abluft von Räumen verwendet wird, ist bei Beibehaltung der Leistungsdaten die in etwa gleiche Größe der jeweiligen Luftvolumenströme *Zentralklimagerät/Verfahren entsprechend der Erfindung*.

**Beispiel 3**

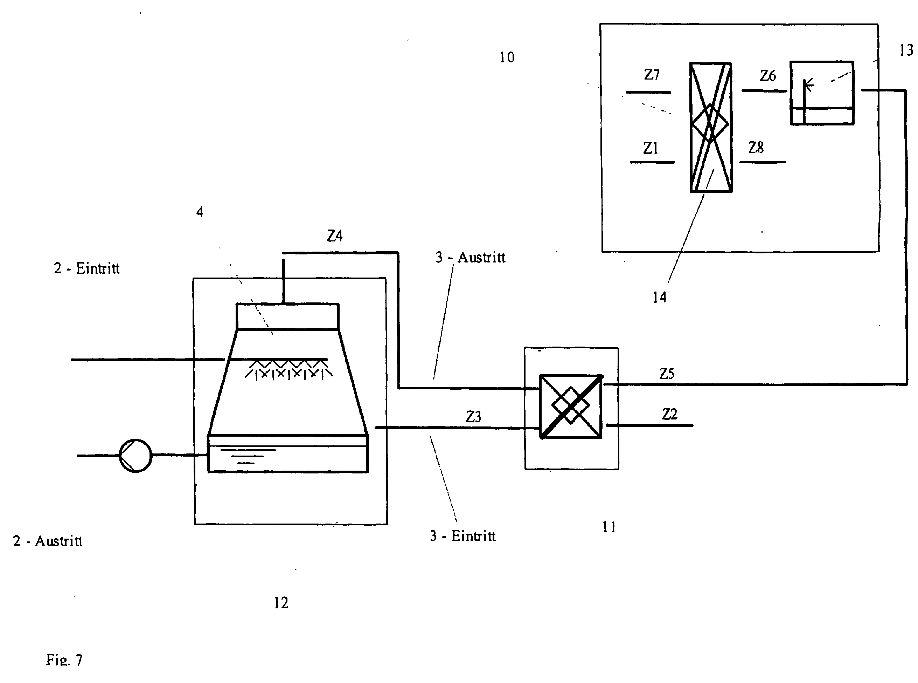

Die benannten Zustandspunkte Zx, mit x gleich 1 bis 8, sind in Fig. 7 sinngemäß räumlich zugeordnet. Die adiabate Befeuchtung wird als gute Näherung mit einer Linie h=konst. beschrieben.

> Außenluftzustand    $t_{L,a}$ = 32 ˚C    $x_{L,a}$ = 12 g/kg gemäß Fig. 5/Bereich IV
> Z1

Im Nachfolgendem eine Auflistung von Zustandspunkten in einem Zentralklimagerät 10 mit adiabater Abluftbefeuchtung und rekuperativem Wärmetauscher (Φ = 0,6) bei alleinigem Betrieb zum Vergleich mit dem darunter anschließenden Betrachtungen:

| | | |
|---|---|---|
| Abluftzustand Raum = Luftzustand vor adiabater Abluftbefeuchtung | $t_{Ab} = 26$ °C | $x_{Ab} = 10$ g/kg |
| Abluftzustand nach adiabater Abluftbefeuchtung | $t_{Ab} = 18,7$ °C | $\varphi_{Ab} = 95$ % |
| Abluftzustand nach Vorkühlung der Außenluft | $t_{Ab} = 26,7$ °C | $x_{Ab} = 13$ g/kg |
| Außenluftzustand nach Vorkühlung | $t_{L,a} = 24$ °C | $x_{L,a} = 12$ g/kg |

*Zustandspunkte bei Verwendung der Raumabluft für das Verfahren nach Patentanspruch 1 - vgl. Fig. 7*

Nach einer Ausgestaltung der Erfindung wird das Zentralklimagerät 10 mit adiabater Abluftbefeuchtung und rekuperativem Wärmetauscher (Φ = 0,6) mit einem Kühlturm mit rekuperativem Wärmetauscher 11 (Φ = 0,7) entsprechend der Erfindung gemäß Figur 7 eingesetzt.

Der Luftzustand Z2 beim Eintritt in den Rekuperator 11 ist:
Abluftzustand Raum          $t_E = 26$ °C          $x_E = 10$ g/kg (Fig. 5/Bereich III)
Z2

Nach der Kühlung der Luft im Rekuperator 11 ist der Luftzustand Z3 beim Eintritt in den Kühlturm 12:
$t_E = 21,2$ °C          $x_E = 10$ g/kg erreicht.
Z3

Der Luftzustand Z4 nach Austritt aus dem Kühlturm 12 (es erfolgt eine Enthalpieänderung entsprechend Beispiel 2) beträgt: $t_A = 19,2$ °C und $\varphi_A = 95\%$
Z4

Der Luftzustand Z5 nach Ausstritt aus dem Rekuperator 11 entspricht dem Luftzustand vor adiabater Abluftbefeuchtung im Zentralklimagerät 10 mit:
$t_A = 23,9$ °C          $x_A = 13,4$ g/kg
Z5

Es erfolgt eine adiabater Abluftbefeuchtung im Befeuchter 13 des Zentralklimageräts 10, der Abluftzustand Z6 wird erreicht:
$t_{Ab} = 20,6$ °C          $\varphi_{Ab} = 95$ %
Z6

Der Abluftzustand Z7 nach der Vorkühlung der Außenluft im Wärmetauscher 14 des Zentralklimageräts 10 ist:
$t_{Ab} = 27,4$ °C          $x_{Ab} = 14,7$ g/kg
Z7

Der Außenluftzustand Z8 nach der Vorkühlung im Wärmetauscher 14 des Zentralklimageräts ist:
$t_{L,a} = 25,2$ °C          $x_{L,a} = 12$ g/kg
Z8

Der Vorteil der Verwendung der Raumabluft erfordert eine erhöhte Kühlleistung am Zentralklimagerät zur Erreichung des gleichen Zuluftzustandes.

Mit der beschriebenen Ausgestaltung der Erfindung lässt sich erreichen, dass die Abluft aus Räumen energetisch mehrfach genutzt wird. Nach der erfindungsgemäßen Konzeption erfolgt durch die Raumabluft erst eine Vergrößerung des Anwendungszeitraums eines Kühlturms durch Betrieb in Zeiten, in denen der Außenluftzustand keine ausreichende Kühlung zulassen würde. Anschließend kann die Raumabluft den nachfolgenden Prozessen im Zentralklimagerät, wie hier der adiabaten Abluftbefeuchtung, zugeführt werden.

Die Kühlung des Fluidstromes A erfolgt gemäß Fig. 7 in einem offenen Kühlturm 12 in erfindungsgemäßer Weise.

**Formelzeichen und Indizes**

Deutsches Alphabet

| Formelzeichen | Bedeutung |
|---|---|
| $c_p$ | massespezifische Wärmekapazität bei konstantem Druck |
| h | massespezifische Enthalpie |
| m | Masse |
| q | flächenspezifische Wärme |

Tabelle fortgesetzt

| Formelzeichen | Bedeutung |
|---|---|
| t | Temperatur |
| x | absoluter Feuchtegehalt der trockenen Luft |
| z | Abminderungsfaktor von Sonnenschutzvorrichtungen |
| P | Leistung |
| Q | Wärme |
| V | Volumen |

Griechisches Alphabet

| Formelzeichen | Bedeutung |
|---|---|
| $\lambda$ | Wärmeleitkoeffizient |
| $\rho$ | Dichte |
| $\varphi$ | relative Feuchte |
| $\Phi$ | Rückwärmezahl |

Hochgestellte Indizes

| Index | Bedeutung |
|---|---|
| . | pro Zeiteinheit |

Tiefgestellte Indizes

| Index | Bedeutung |
|---|---|
| a | außen |
| d | Dicke einer Schicht |
| el | elektrisch |
| m | Mittel, im Mittel |
| max | maximal |
| t | trocken |
| A | Ausgang |
| Ab | Abluft |
| E | Eingang |
| F | Feuchtkugel |
| FW | Frischwasser |
| K | Kühllast |
| KW | Kaltwasser |
| L | Luft |
| R | Rücklauf |
| V | Vorlauf |
| Zu | Zuluft |

**Zitierte Nichtpatentliteratur**

[1] Recknagel, Sprenger, Schramek:

Taschenbuch für Heizung und Klimatechnik - einschließlich Warmwasser- und Kältetechnik
Hrsg. von Prof. Dr.-Ing. Ernst Rudolf Schramek, 67. Auflage, R. Oldenbourg, Verlag München Wien, 1995

[2] Bosnjakovic̓, F.:

Technische Thermodynamik; II Teil
5., durchgesehene Auflage, Verlag Theodor Steinkopf, Dresden, 1971

[3] Klenke, Werner:

Die Wärme- und Stoffübertragung bei der Verdunstungskühlung und die Beurteilung von Kühltürmen
Dissertation, TH Braunschweig, 1964

[4] Streng, Andreas:

Berechnungsmodell der nichtadiabaten Verdunstungskühlung in Fluidkühltürmen und Verdunstungskondensatoren
Fortschritt-Berichte VDI, Reihe 19 Wärmetechnik/Kältetechnik Nr. 115, VDI Verlag Düsseldorf, 1998

[5] Blümel, Klaus; Hollan, Eberhard; Kähler, Malte; Peter, Rainer:

Entwicklung von Testreferenzjahren (TRY) für Klimaregionen der Bundesrepublik Deutschland
Institut für Geophysikalische Wissenschaften , Fachrichtung Theoretische Meteorologie, FU Berlin, Forschungsbericht T86-051 des Bundesministeriums für Forschung und Technologie, 1986

[6] Fischer, Volker:

Gekoppelte numerische Simulation von Raumluftströmung, Raumumschließungskonstruktion und Heizungsanlage
Dissertation, TU Dresden, 1997

[7] Richtlinie VDI 2078:

Berechnung der Kühllast klimatisierter Räume (VDI Kühllastregel); Juli 1996

[8] Norm DIN 1946:

Raumlufttechnik; Terminologie und graphische Symbole (VDI-Lüftungsregeln) Teil 1 Oktober 1988
Raumlufttechnik-Gesundheitstechnische Anforderungen (VDI-Lüftungsregeln) Teil 2 Januar 1994

**LISTE DER BEZUGSZEICHEN**

1 Technischer Abschnitt 1 zur Kühlung eines Fluidstroms unter Ausnutzung der Verdunstungskühlung - hier als Beispiel ein Kühlturm

2 zu kühlender Fluidstrom A

3 Fluidstrom B, der den verdunstenden Stoff- oder Stoffgemischstrom aufnimmt

4 verdunstender Stoff- oder Stoffgemischstrom

5 Technischer Abschnitt 2 zur Übertragung von Energie - hier als Beispiel Erwärmer bzw. Kühler zur sensiblen Wärmeübertragung mit Kreuzung der Luftströme

6   Zwischendeckenbereich

7   Außenluft- bzw. Fassadenbereich

8   Anschluss an Flächenkühlsystem

9   Technischer Abschnitt 1 zur Kühlung eines Fluidstroms unter Ausnutzung der Verdunstungskühlung - hier als Beispiel dezentrale Einheit kleiner Leistung

10   Systemausschnitt eines Zentralklimagerätes mit Darstellung des Abschnittes zur Außenluftvorkühlung mittels adiabater Abluftbefeuchtung (Symbole entsprechend [8])

11   Rekuperator

12   Kühlturm

13   Befeuchter des Zentralklimagerätes

14   Wärmetauscher des Zentralklimagerätes

$t_1$   Grenztemperatur 1
Außenlufttemperatur, ab der gekühlt werden soll

$t_2$   Grenztemperatur 2
Außenlufttemperatur, bis zu der die max. Raumtemperatur des zu kühlenden Raumes eingehalten werden soll

$h_1$   Feuchtkugeltemperatur$_{Auslegungsfall}$ des Kühlturms - als ausreichende Näherung mit einer Linie h = konst. beschrieben

$h_2$   Austrittsenthalpie der Luft aus dem Kühlturm für den Auslegungsfall

$h_3$   Eintrittsfeuchtkugeltemperatur der Luft in den Kühlturm, bis zu der Kaltwasser, entsprechend Beispiel 2, mit ausreichend geringer Vorlauftemperatur erzeugt werden kann - als ausreichende Näherung mit einer Linie h = konst. beschrieben

$h_4$   Austrittsenthalpie der Luft aus dem Kühlturm für $h_3$ (Beispiel 2)

$P_1$   Punkt [$h_1$; t($h_2$, Austrittsfeuchte der Luft aus dem Kühlturm)]

$P_2$   Punkt [$t_2$; h = $h_1$+$\Delta$h]; $\Delta$h=$c_{p,L}$ · $\Phi$ · ($t_2$ - t($h_2$, Austrittsfeuchte der Luft aus dem Kühlturm))

$P_3$   Kaltwasserrücklauftemperatur im Auslegungsfall

$P_4$   Kaltwasservorlauftemperatur im Auslegungsfall

$P_5$   Punkt [$h_3$; t($h_4$, Austrittsfeuchte der Luft aus dem Kühlturm)]

$P_6$   Punkt [$t_2$; h = $h_3$+$\Delta$h]; $\Delta$h=$c_{p,L}$ · $\Phi$ · ($t_2$ - t($h_4$, Austrittsfeuchte der Luft aus dem Kühlturm))

$P_7$   Kaltwasserrücklauftemperatur für den Betriebsfall $h_3$, $h_4$

$P_8$   Kaltwasservorlauftemperatur für den Betriebsfall $h_3$, $h_4$

Zx   Kennzeichnung der Zustandspunkte entsprechend Beispiel 3

**Patentansprüche**

1. Verfahren zur Kühlung von Kaltwasser (2), wobei

    a) zu befeuchtende Luft (3) in einem technischen Abschnitt zur Übertragung von Energie (5) vorgekühlt wird und
    b) in einem technischen Abschnitt zur Kühlung eines Fluidstromes (1) mittels Befeuchtung unter Ausnutzung der Verdunstungskühlung weiter gekühlt wird, wonach
    c) die befeuchtete kühle Luft (3) im technischen Abschnitt zur Übertragung von Energie (5) Wärme von der zu befeuchtenden Luft (3) aufnimmt, wobei
    d) das Kaltwasser (2) bei der Befeuchtung der Luft (3) in Verfahrensschritt b) direkt oder indirekt gekühlt wird.

2. Verfahren nach Anspruch 1, **dadurch gekennzeichnet, dass**

    e) die erwärmte Luft (3) nach Verfahrensschritt c) erneut adiabat befeuchtet wird und anschließend
    f) Wärme von der Zuluft in einem Wärmetauscher (14) aufnimmt und diese kühlt.

3. Verfahren nach Anspruch 1 oder 2, **dadurch gekennzeichnet, dass** als zu befeuchtende Luft (3) die Abluft von Räumen verwendet wird.

4. Vorrichtung zur Durchführung eines Verfahrens nach einem der Ansprüche 1 bis 3, wobei als technischer Abschnitt (1) zur Verdunstungskühlung von Kaltwasser (2) ein Kühlturm (1) vorgesehen ist und dass als technischer Abschnitt (5) zur Übertragung von Energie ein Wärmeübertrager (5) vorgesehen ist, wobei der Wärmeübertrager (5) mit dem Kühlturm (1) derart miteinander verbunden ist, dass die Luft (3) über den Wärmeübertrager (5) zum Kühlturm (1) zur Befeuchtung und wieder über den Wärmeübertrager (5) leitbar ist.

5. Vorrichtung nach Anspruch 4 zur Durchführung eines Verfahrens nach Anspruch 2, **dadurch gekennzeichnet, dass** als technischer Abschnitt (5) ein Rekuperator (11) zur Kühlung der im Kühlturm (12) zu befeuchtenden Luft vorgesehen ist und dass zusätzlich ein Befeuchter (13) und ein Wärmetauscher (14) eines Zentralklimagerätes (10) vorgesehen sind, die die aus dem Rekuperator (11) austretende erwärmte Abluft befeuchten und erwärmen, wobei die Zuluft im Wärmetauscher (14) gekühlt wird.

6. Vorrichtung nach Anspruch 4, **dadurch gekennzeichnet, dass** als technischer Abschnitt (1) zur Verdunstungskühlung von Kaltwasser (2) dezentrale Einheiten zum Einbau in Zwischendecken zur Kaltwasserbereitstellung vorgesehen sind.


**Claims**

1. A method for cooling cold water (2), wherein

    a) air (3) to be humidified is precooled in a technical section for transferring energy (5) and
    b) is cooled further in a technical section for cooling a fluid flow (1) using humidification with exploitation of evaporative cooling, after which
    c) the humidified cool air (3) absorbs heat from the air (3) to be humidified in the technical section for the transfer of energy (5),
    d) the cold water (2) being cooled directly or indirectly during the humidification of the air (3) in method step b).

2. The method according to claim 1,
   **characterized in that**

    e) the heated air (3) is adiabatically humidified again after method step c) and subsequently
    f) absorbs heat from the additional air in a heat exchanger (14) and cools it.

3. The method according to claim 1 or 2,
   **characterized in that** the exhaust air of rooms is used as the air (3) to be humidified.

4. A device for performing a method according to one of claims 1 through 3,
   wherein a cooling tower (1) is provided as the technical section (1) for the evaporative cooling of cold water (2) and a heat exchanger (5) is provided as the technical section (5) for transferring energy, the heat exchanger (5) being connected to the cooling tower (1) in such a way that the air (3) may be conducted via the heat exchanger (5) to the cooling tower (1) for humidification and back via the heat exchanger (5).

**5.** The device according to Claim 4 for performing a method according to claim 2,
**characterized in that** a recuperator (11) for cooling the air to be humidified in the cooling tower (12) is provided as the technical section (5) and, in addition, a humidifier (13) and a heat exchanger (14) of a central air-conditioning device (10) are provided, which humidify and heat the heated exhaust air coming out of the recuperator (11), the additional air being cooled in the heat exchanger (14).

**6.** The device according to claim 4,
**characterized in that** decentralized units for installation in intermediate ceilings for providing cold water are provided as the technical section (1) for the evaporative cooling of cold water (2).

**Revendications**

**1.** Procédé pour le refroidissement d'eau froide (2),

a) l'air (3) à humidifier étant pré-refroidi dans une partie technique pour la transmission d'énergie (5) et
b) étant de nouveau refroidi dans une partie technique pour le refroidissement d'un flux de fluide (1) par humidification avec l'utilisation du refroidissement par évaporation, après quoi
c) l'air (3) frais et humidifié reçoit dans la partie technique pour la transmission d'énergie (5) de la chaleur de l'air (3) à humidifier,
d) l'eau froide (2) étant refroidie directement ou indirectement lors de l'humidification de l'air (3) dans l'étape de procédé b).

**2.** Procédé selon la revendication 1, **caractérisé en ce que**

e) l'air (3) réchauffé est humidifié de nouveau de façon adiabatique après l'étape de procédé c) et
f) reçoit ensuite de la chaleur de l'air d'arrivée dans un échangeur de chaleur (14) et refroidit celui-ci.

**3.** Procédé selon la revendication 1 ou 2, **caractérisé en ce que** l'air évacué des locaux est utilisé comme air (3) à humidifier.

**4.** Dispositif pour la mise en oeuvre d'un procédé selon l'une quelconque des revendications 1 à 3, une tour de refroidissement (1) étant prévue comme partie (5) technique pour le refroidissement par évaporation d'eau froide (2) et un caloporteur (5) étant prévu comme partie (5) technique pour la transmission de l'énergie, le caloporteur (5) étant relié à la tour de refroidissement (1) de telle sorte que l'air (3) peut être dirigé via le caloporteur (5) vers la tour de refroidissement (1) pour l'humidification et de nouveau via le caloporteur (5).

**5.** Dispositif selon la revendication 4, pour la mise en oeuvre d'un procédé selon la revendication 2, **caractérisé en ce qu'**un récupérateur (11) est prévu comme partie (5) technique pour le refroidissement de l'air à humidifier dans la tour de refroidissement (12) et ce que en supplément un humidificateur (13) et un échangeur de chaleur (14) d'un appareil de climatisation central (10) sont prévus, lesquels humidifient l'air évacué réchauffé sortant du récupérateur (11) et le réchauffent, l'air d'arrivée étant refroidi dans l'échangeur de chaleur (14).

**6.** Dispositif selon la revendication 4, **caractérisé en ce que**, comme partie (1) technique pour le refroidissement par évaporation d'eau froide (2), des unités décentralisées sont prévues pour le montage dans des plafonds intermédiaires pour la fourniture d'eau froide.

Fig. 1

2 - Eintritt

2 - Austritt

3 - Austritt

3 - Eintritt

1

4

5

Fig. 2

Fig. 3

Fig. 4a

| Beschreibung | Dicke der Schicht d/m | Dichte $\rho/(kg/m^3)$ | Wärmekapazität $c_p/(kJ/(kg\,K))$ | Wärmeleitkoeffizient $\lambda/(W/(m^2K))$ |
|---|---|---|---|---|
| **Innenwände 1, 4, 7** | | | | |
| Gipskarton | 0,025 | 900 | 1 | 0,21 |
| Dämmstoff | 0,06 | 20 | 1 | 0,04 |
| Gipskarton | 0,025 | 900 | 1 | 0,21 |
| **Außenwand 5 (SW)** | | | | |
| Putz | 0,015 | 1200 | 1 | 0,35 |
| Kalksandstein | 0,24 | 1200 | 1 | 0,56 |
| Dämmstoff | 0,08 | 40 | 1,5 | 0,04 |
| Putz | 0,01 | 1000 | 1 | 0,7 |
| **Decke, Fußboden 8, 9** | | | | |
| Stahlbeton | 0,18 | 2400 | 1 | 2,1 |
| Dämmstoff | 0,02 | 50 | 1,5 | 0,04 |
| Estrich | 0,045 | 2000 | 1 | 1,4 |
| **Tür 2, 3** | | | | |
| Holz | 0,06 | 600 | 1,7 | 0,2 |
| **Fenster 6** (Rahmenanteil 20 %) | | | | |
| Doppelscheiben WS-Verglasung | $k_f = 1,7\ W/(m^2K)$ | | | |

Fig. 4b

Fig. 5

Fig. 6

EP 1 425 543 B1

10

13

Z7

Z6

Z1

Z8

14

4

Z4

2 - Eintritt

3 - Austritt

Z5

Z3

Z2

3 - Eintritt

2 - Austritt

11

12

Fig. 7